# FASCICULE DE BREVET EUROPEEN

(11) **EP 1 693 266 B1**
(45) Date de publication et mention de la délivrance du brevet: **15.07.2009**
(21) Numéro de dépôt: 06002112.8
(22) Date de dépôt: 02.02.2006
(51) Int. Cl.: B60T 13/567

(54) **Tirant pour servomoteur d'assistance au freinage d'un véhicule et servomoteur appliquant un tel tirant**
Haltebolzen für den Bremskraftverstärker eines Kraftfahrzeuges und Kraftverstärker mit einem solchen Haltebolzen
Fixing bolt for the brake booster of a vehicle and brake booster with such a fixing bolt

(30) Priorité: 18.02.2005 FR 0501808
(43) Date de publication de la demande: 23.08.2006
(73) Titulaire: ROBERT BOSCH GMBH, 70442 Stuttgart (DE)
(72) Inventeur: Samson, Gwenael, 56140 Saint Abraham (FR); Michon, Jean-Pierre, 77178 Saint Pathus (FR); Luengo, Francisco, 93600 Aulnay sous Bois (FR)
(74) Mandataire: Hurwic, Aleksander Wiktor

(56) Documents cités:
- DE-A1- 10 138 301
- DE-A1- 19 915 941
- US-B1- 6 481 330

## Description

L'invention concerne un tirant pour servomoteur d'assistance au freinage d'un véhicule. L'invention concerne également un servomoteur utilisant un tel tirant.

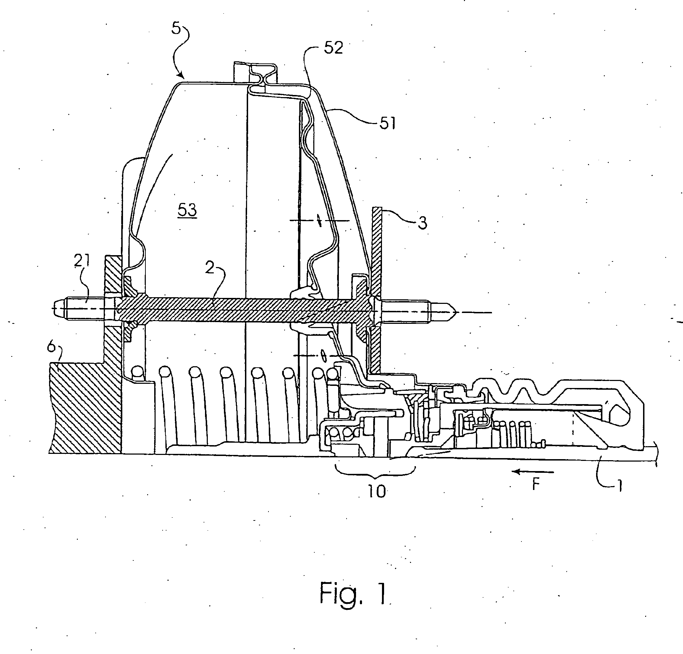

Dans un véhicule automobile, le servomoteur d'assistance au freinage est généralement placé dans le compartiment avant du véhicule, lequel est souvent le compartiment moteur. Comme cela est représenté en figure 1, le boîtier du servomoteur comporte une paroi avant 50 et une paroi arrière 51. A l'intérieur du boîtier se trouve la jupe 52 qui permet comme cela est connu dans la technique, de retransmettre des efforts F transmis par une tige de commande 1 et un piston 10 à une tige de poussée laquelle communique les efforts au maître cylindre 6.

Il est connu dans la technique de fixer le servomoteur au tablier qui sépare le compartiment avant du véhicule de la cabine du conducteur.

Selon le mode de fixation de la figure 1, les moyens de fixation comporte des tiges ou tirants qui traversent de part en part le boîtier du servomoteur.

Ce mode de fixation présente l'avantage que les tirants tel que 2 peuvent comporter des moyens pour régler la distance entre les parois avant 50 et arrière 51 du servomoteur et pour rigidifier ainsi axialement le servomoteur.

Cependant, ces tirants traversent la chambre avant 53 du servomoteur dans laquelle il est prévu de faire le vide pour que le servomoteur procure, comme cela est sa fonction, l'assistance au freinage souhaitée. Il ne doit donc pas se produire de fuites au niveau de ces tirants dans les zones où ils traversent, d'une part, la paroi avant 50 du servomoteur et d'autre part la jupe 52.

Par ailleurs chaque tirant possède à ses deux extrémités des parties filetées 20 et 21 permettant de visser des écrous. La partie filetée 20 permet de fixer le servomoteur à un tablier du compartiment moteur et la partie filetée 21 permet de fixer le maître cylindre 6 sur le servomoteur..

Comme cela est visible sur la figure 1, chaque tirant est souvent serti dans la paroi arrière du servomoteur ce qui peut provoquer des déformations lors du sertissage. De plus, le serrage des écrous de fixation sur les parties filetées crée des contraintes dans les tirants.

L'invention a pour but de résoudre ces inconvénients.

L'invention concerne donc un tirant pour servomoteur d'assistance au freinage de véhicule destiné à la fixation du servomoteur sur le tablier d'un compartiment d'un véhicule, par une paroi arrière du servomoteur, ainsi qu'à la fixation d'un maître cylindre de commande de freinage sur une paroi avant dudit servomoteur. Le tirant traverse les parois avant et arrière du servomoteur et comporte une première extrémité possédant une première partie filetée destinée à être fixée audit tablier du compartiment du véhicule et une deuxième extrémité comportant une deuxième partie filetée destinée à permettre la fixation dudit maître cylindre à la paroi avant du servomoteur. Le tirant comporte à chacune de ses extrémités un épaulement présentant une surface d'appui de forme tronconique. Chaque épaulement étant situé de telle façon que sa partie rétrécie de sa surface tronconique soit à proximité d'une partie filetée et soit destinée à se trouver à l'intérieur du servomoteur de telle façon que chaque surface tronconique soit destinée à être en contact avec un trou d'une paroi du servomoteur.

L'invention est également applicable à un servomoteur appliquant un tel tirant. De préférence, chaque trou des parois du servomoteur présente une surface tronconique complémentaire de la surface tronconique d'un épaulement d'un tirant.

Avantageusement, chaque trou possède une surépaisseur possédant une surface intérieure tronconique.

Chaque surépaisseur peut comporter une rondelle fixée à une paroi du servomoteur et dont le trou intérieur présente une surface tronconique.

Cette rondelle peut être fixée à une paroi du servomoteur par repliement du matériau de la paroi sur les surfaces tronconiques du trou de la rondelle.

Les différents objets caractéristiques de l'invention apparaîtront plus clairement dans la description qui va suivre et dans les figures annexées qui représentent:
- la figure 1, un système de fixation par tirants connu dans la technique et décrit précédemment,
- la figure 2, un exemple de réalisation d'un tirant selon l'invention et un servomoteur utilisant un tel tirant.

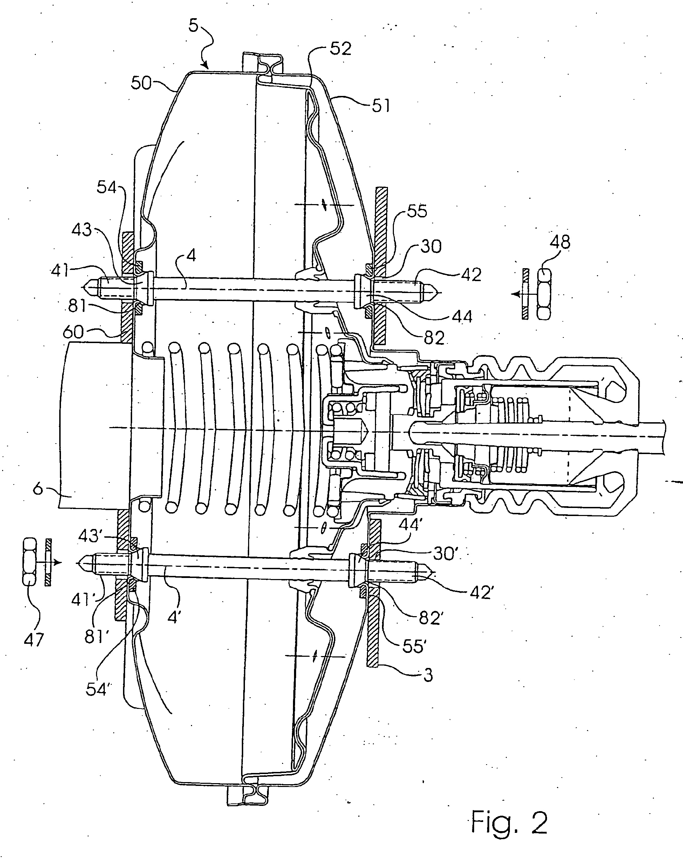

En se reportant à la figure 2, on va donc décrire un système de fixation d'un servomoteur par des tirant selon l'invention.

On retrouve sur cette figure 2, le tablier 3 du compartiment moteur du véhicule à laquelle il est prévu de fixer le servomoteur 5 ainsi que le maître cylindre 6 qui doit être fixé au servomoteur.

Le servomoteur possède un boîtier qui possède une paroi avant 50 et une paroi arrière 51. A l'intérieur se trouve la jupe 52 solidaire du piston 10 et permettant de transmettre les efforts de freinage vers le maître cylindre de freins.

La paroi arrière 51 est celle qui doit être accolée à la paroi 3 du compartiment moteur. La paroi avant 50 est celle à laquelle doit être fixée le maître cylindre 6.

A l'intérieur du servomoteur sont placés des tirants 4 et 4' dont les extrémités filetées 41-42 et 41'-42' passent à travers les parois 50 et 51. Les extrémités 42 et 42' passent à travers les trous 30 et 30' du tablier 3 du compartiment moteur. Des écrous, tels que l'écrou 48, vissés sur les extrémités 42 et 42' permettent de fixer les tirants au tablier 3.

Des épaulements 44 et 44' sont plaqués contre la paroi arrière 51 du servomoteur. Ces épaulements présentent une surface tronconique dont la partie rétrécie est orientée vers une extrémité filetée (42, 42').

Par ailleurs, la paroi arrière 51 du servomoteur possède aux emplacements des passages des extrémités 42, 42' des tirants, des trous 82, 82' présentant des surfaces également tronconiques de formes complémentaires de celles des épaulements. Ainsi les surfaces tronconiques des épaulements peuvent s'appuyer parfaitement dans les surfaces tronconiques de ces trous. Ces trous peuvent comporter des rondelles 55, 55' fixées à la paroi arrière 51 et possédant chacune un trou tronconique. Les épaulements tronconiques ont donc une surface portante sur les surfaces des trous 82, 82' pour assurer à la fois un blocage des épaulements dans ces trous et pour assurer une étanchéité parfaite entre les épaulements et les trous.

De même aux extrémités filetées 41 et 41' sont également associés des épaulements 43 et 43' de formes tronconiques. Les extrémités filetées 41 et 41' ont pour objet de fixer une embase 60 du maître cylindre 6 à la paroi avant 50 du servomoteur à l'aide d'écrous tels que l'écrou 47. Les surfaces tronconiques des épaulements 43 et 43' sont plaquées contre des trous 81, 81' de formes également tronconiques prévus dans la paroi avant 50. Les trous tronconiques 81, 81' sont faits de la même façon que les trous 82, 82' de la paroi arrière du servomoteur. Les épaulements 43 et 43' en se plaquant dans les trous tronconiques vont donc également se bloquer dans les trous.

On constate donc que lors du montage du servomoteur sur le tablier du compartiment moteur et le montage du maître cylindre sur le servomoteur, le serrage des écrous tels que 47 et 48 sur les parties filetées 41-41' et 42-42' aura pour effet de bloquer les embases des tirants dans les trous tronconiques des parois du servomoteur. De ce fait il n'y aura pas de risque de déformation ni de torsion des tirants. De plus, les surfaces tronconiques assureront une étanchéité parfaite entre les embases des tirants et les trous des parois du servomoteur.

Il est à noter que la fixation des rondelles 54-54' et 55-55' peut se faire par repliement du matériau des parois du servomoteur sur les faces tronconiques des rondelles.

Le système de l'invention présente l'avantage de fournir un système de fixation du servomoteur facile à monter.

De plus, les surfaces portantes de formes tronconiques des épaulements des tirants et des trous correspondants des parois avant et arrière du servomoteur fournissent une étanchéité métal contre métal qui est sûre.

On notera également que lors du serrage des écrous sur les parties filetées, les surfaces tronconiques des épaulements des tirants et celles des trous des parois du servomoteur auront tendance à se bloquer entre elles. Les efforts de serrages ne se répercuteront donc pas sur les tirants.

Enfin, les tirants sont symétriques ce qui est intéressant tant pour la fabrication que pour le montage.

## Revendications

1. Tirant pour servomoteur d'assistance au freinage de véhicule destiné à la fixation d'un servomoteur sur le tablier (3) d'un compartiment d'un véhicule, par une paroi arrière du servomoteur (51), ainsi qu'au montage d'un maître cylindre de commande de freinage (6) sur une paroi avant (50) dudit servomoteur, ledit tirant (4) traversant les parois avant et arrière (50, 51) du servomoteur et comportant une première extrémité possédant une première partie filetée (42) destinée à être fixée audit tablier (3) du compartiment du véhicule et une deuxième extrémité comportant une deuxième partie filetée (41) destinée à permettre la fixation dudit maître cylindre (6) à la paroi avant (50) du servomoteur, **caractérisé en ce que** ledit tirant (4) comporte à chacune de ses extrémités un épaulement (43, 44) présentant une surface d'appui de forme tronconique, chaque épaulement (43, 44) étant situé de telle façon que sa partie rétrécie de sa surface tronconique soit à proximité d'une partie filetée (41, 42 respectivement) et soit destinée à se trouver à l'intérieur du servomoteur de telle façon que chaque surface tronconique soit destinée à être en contact avec un trou (81, 82) d'une paroi du servomoteur.

2. Servomoteur appliquant le tirant selon la revendication 1, **caractérisé en ce que** chaque trou (81, 82) des parois (50, 51) du servomoteur présente une surface tronconique complémentaire de la surface tronconique d'un épaulement (43, 44) d'un tirant.

3. Servomoteur selon la revendication 2, **caractérisé en ce que** chaque trou (81, 82) possède une surépaisseur possédant une surface intérieure tronconique.

4. Servomoteur selon la revendication 3, **caractérisé en ce que** chaque surépaisseur comporte une rondelle (54, 55) fixée à une paroi du servomoteur (50, 51) et dont le trou intérieur présente une surface tronconique.

5. Servomoteur selon la revendication 5, **caractérisé en ce que** ladite rondelle (54, 55) est fixée à une paroi (50, 51) du servomoteur par repliement du matériau de la paroi sur les surfaces tronconique du trou de la rondelle.

## Claims

1. Vehicle brake booster tie rod intended for securing a booster to the bulkhead (3) of a vehicle compartment via a rear wall of the booster (51) and for mounting a brake control master cylinder (6) on a front wall (50) of said booster, said tie rod (4) passing through the front and rear walls (50, 51) of the booster and comprising a first end having a first threaded part (42) intended to be secured to said bulkhead (3) of the vehicle compartment and a second end having a second threaded part (41) intended to allow said master cylinder (6) to be secured to the front wall (50) of the booster, **characterized in that** said tie rod (4) comprises, at each of its ends, a shoulder (43, 44) exhibiting a bearing surface of frustoconical shape, each shoulder (43, 44) being situated in such a way that the narrow part of its frustoconical surface is near a threaded part (41, 42 respectively) and is intended to lie inside the booster in such a way that each frustoconical surface is intended to be in contact with a hole (81, 82) in a wall of the booster.

2. Booster using the tie rod according to Claim 1, **characterized in that** each hole (81, 82) in the walls (50, 51) of the booster has a frustoconical surface that complements the frustoconical surface of a shoulder (43, 44) of a tie rod.

3. Booster according to Claim 2, **characterized in that** each hole (81, 82) has an additional thickness possessing a frustoconical interior surface.

4. Booster according to Claim 3, **characterized in that** each additional thickness comprises a washer (54, 55) secured to one wall of the booster (50, 51) and the interior hole of which has a frustoconical surface.

5. Booster according to Claim 5, **characterized in that** said washer (54, 55) is secured to a wall (50, 51) of the booster by bending the wall material back onto the frustoconical surfaces of the hole in the washer.

## Patentansprüche

1. Zugbolzen für einen Servomotor zur Unterstützung der Bremskraft eines Fahrzeugs, der zum Befestigen eines Servomotors an der Spritzwand (3) eines Fahrzeugs über eine Rückwand (51) des Servomotors sowie zum Anbringen eines Hauptzylinders zur Bremssteuerung (6) an einer Vorderwand (50) des Servomotors bestimmt ist, wobei der Zugbolzen (4) durch die Vorder- und Rückwand (50, 51) des Servomotors hindurchgeht und ein erstes Ende aufweist, das einen ersten Gewindeteil (42) besitzt, der dazu bestimmt ist, an der Spritzwand (3) des Fahrzeugs befestigt zu sein, und ein zweites Ende mit einem zweiten Gewindeteil (41), der dazu bestimmt ist, das Befestigen des Hauptzylinders (6) an der Vorderwand (50) des Servomotors zu ermöglichen, **dadurch gekennzeichnet, dass** der Zugbolzen (4) an jedem seiner Enden eine Schulter (43, 44) umfasst, die eine kegelstumpfförmige Auflagefläche aufweist, wobei jede Schulter (43, 44) so angeordnet ist, dass ihr verjüngter Teil ihrer kegelstumpfförmigen Fläche in der Nähe eines Gewindeteils (41 bzw. 42) liegt und dazu bestimmt ist, sich innerhalb des Servomotors zu befinden, so dass jede kegelstumpfförmige Fläche dazu bestimmt ist, mit einem Loch (81, 82) einer Wand des Servomotors in Kontakt zu stehen.

2. Servomotor, bei dem der Zugbolzen nach Anspruch 1 verwendet wird, **dadurch gekennzeichnet, dass** jedes Loch (81, 82) der Wände (50, 51) des Servomotors eine kegelstumpfförmige Fläche aufweist, die zur kegelstumpfförmigen Fläche einer Schulter (43, 44) eines Zugbolzens komplementär ist.

3. Servomotor nach Anspruch 2, **dadurch gekennzeichnet, dass** jedes Loch (81, 82) eine Überdicke besitzt, die eine innere kegelstumpfförmige Fläche aufweist.

4. Servomotor nach Anspruch 3, **dadurch gekennzeichnet, dass** jede Überdicke eine Scheibe (54, 55) aufweist, die an einer Wand (50, 51) des Servomotors befestigt ist und deren inneres Loch eine kegelstumpfförmige Fläche aufweist.

5. Servomotor nach Anspruch 5, **dadurch gekennzeichnet, dass** die Scheibe (54, 55) an einer Wand (50, 51) des Servomotors durch Umbiegen des Materials der Wand über die kegelstumpfförmige Flächen des Lochs der Scheibe befestigt ist.
